# EUROPÄISCHE PATENTANMELDUNG

(11) **EP 2 514 769 A1**
(43) Veröffentlichungstag der Anmeldung: **24.10.2012**
(21) Anmeldenummer: 11163559.5
(22) Anmeldetag: 21.04.2011
(51) Int. Cl.: C08C 1/15, C08F 36/18

(54) **Verfahren zur Gewinnung und Isolierung von Polychloropren-Feststoffen**

(71) Anmelder: LANXESS Deutschland GmbH, 51369 Leverkusen (DE)
(72) Erfinder: Neuner, Thomas, 40721 Hildende (DE); Stange, Heiner, 41464 Neuss (DE); Josten, Rolf, 41469 Neuss (DE); Feller, Rolf, 40822 Mettmann (DE); Fidan, Mesut, 41539 Dormagen (DE)

(57) **Zusammenfassung**

Die Erfindung betrifft Verfahren zur Isolierung und Gewinnung von Polychloropren-Feststoffen, wobei eine wässrige Polychloropren-Dispersion mit Koagulationsmittel enthaltendem Wasserdampf in Kontakt gebracht wird, wodurch der Polychloropren-Feststoff koaguliert.

## Beschreibung

Die Erfindung betrifft ein Verfahren zur Gewinnung und Isolierung von Polychloropren-Feststoffen auf Basis von Kautschuk-Dispersionen und die so hergestellten Polychloropren-Feststoffen.

Die Polychloropren-Herstellung ist seit langem bekannt. Durch radikalische Emulsionspolymerisation von Chloropren (2-Chlor-1,3-butadien) werden Latices aus Polychloropren hergestellt. Derartige Latices werden im Rahmen dieser Anmeldung auch als "Polychloropren-Latices" oder "Polychloropren-Dispersionen" bezeichnet.

Bei der Herstellung werden in einem wässrigen Medium die Monomere in einem Emulgatorsystem polymerisiert. Dieses ist in der Regel anionischer Natur, in seltenen Fällen kommen auch nichtionische oder kationische Systeme zum Einsatz. Der Temperaturbereich, in dem die Polymerisation durchgeführt wird, umfasst Werte von ca. 0°C bis über 80°C. Somit kann die Polymerisation durch thermisch zerfallende Radikalbildner initiiert werden oder durch Redoxsysteme. In der Regel kommen auch Molekulargewichtsregler wie Mercaptane oder Xanthogendisulfide zum Einsatz. In einigen Fällen wird das Molekulargewicht des Endproduktes auch durch Copolymerisation mit Schwefel und anschließende Spaltung der dabei entstehenden sulfidischen Bindungen eingestellt. Der erwünschte Umsatz wird durch Abstoppen der Reaktion mit einem geeigneten Reagenz eingestellt.

In der weit überwiegenden Zahl der Fälle wird die so erhaltene Dispersion von Polychloropren in Wasser nachfolgend mittels Durchleiten von Wasserdampf entmonomerisiert. Ein Teil des dabei erhaltenen Produktes findet unmittelbar als Latex industrielle Verwendung, der größere Teil jedoch wird durch Koagulation von anhaftendem Wasser befreit und als festes Produkt seiner endgültigen Verwendung zugeführt.

Polychloropren-Feststoffe (sogenannter "CR-Feststoffe") sowie daraus hergestellte Vulkanisate zeichnen sich bei entsprechendem Mischungsaufbau durch hohe Wetter- und Ozonbeständigkeit, durch Flammwidrigkeit, sehr gute Alterungseigenschaften, mittlere Ölbeständigkeit sowie durch beträchtliche Widerstandsfähigkeit gegen viele Chemikalien aus. Sie haben gute mechanische Eigenschaften, ein günstiges elastische Verhalten und ein hohe Verschleißfestigkeit.

Vulkanisate aus Polychloropren-Latices (CR-Latices) weisen hinsichtlich Elastizität, Zugfestigkeit, Bruchdehnung und Modul Werte auf, die denen von Naturlatex-Vulkanisaten sehr ähneln, gleichzeitig zeigen sie auch eine gute Lösungsmittel-, Chemikalien-, Öl- und Fettbeständigkeit.

Wie oben erwähnt, geschieht die Abtrennung des CR-Feststoffes aus der Dispersion üblicherweise durch Koagulation. Hierzu sind eine Reihe verschiedener Verfahren bekannt. Durch Mischen der Polychloropren-Latices mit einem Koagulationsmittel wird die Emulsion aufgebrochen. Zu diesem Zweck kann jedes gewöhnliches Koagulationsmittel verwendet werden. So kann man zum Beispiel aus CR-Latices, die unter alkalischen Bedingungen hergestellt wurden, der Feststoff durch Ansäuern, beispielsweise mit einer Mineralsäure oder einer organischen Säure, koagulieren. In vielen Fällen reicht das bloße Ansäuern zur vollständigen Koagulation des Polychloroprens nicht aus, so dass man zusätzlich zur Säure noch starke Elektrolyte (Salze, die mehrwertige Kationen wie Mg²⁺, Ca²⁺ oder Al³⁺ enthalten) zusetzen muss.

Nachteilig bei dieser Methode ist die große Menge an Säure bzw. Elektrolyte, um eine vollständige Ausfällung des Feststoffes zu erreichen. Dabei verbleiben relativ große Mengen an Fällmittel im Produkt, was zu einer Verschlechterung wichtiger Produkteigenschaften führen kann. Daher wird der koagulierte Feststoff zur Entfernung des Fällmittels mit relativ großen Wassermengen gewaschen, was zu ökonomischen und ökologischen Problemen führt. Ferner fällt das Polychloropren teilweise in Form großer Klumpen aus, die in ihrem Inneren entweder noch ungefällten CR-Latex oder überschüssiges Fällmittel enthalten.

Auch ist aus dem Stand der Technik bekannt, die Koagulation durch Einwirkung höherer Temperaturen und/oder erhöhten Drücken sowie durch zusätzliche Einwirkung von Elektrolyten und Scherkräften zu ermöglichen. Ein derartiges Produkt wird einer erheblichen thermischen Belastung ausgesetzt, was zu einer Verschlechterung der Produkteigenschaften führt.

Üblicherweise wird Polychloropren aus wässrigen Dispersionen durch Ausfrieren abgetrennt. Dabei wird durch Abkühlen unter den Gefrierpunkt der wässrigen Phase der CR-Latex ausgefroren. Beim anschließenden Auftauen unter geeigneten Bedingungen liegt das Polychloropren als Koagulat vor und kann von der wässrigen Phase abgetrennt werden.

Um zu technisch ausreichend großen Koagulationsgeschwindigkeiten zu kommen, wird der CR-Latex in dünnen Schichten ausgefroren. Dazu wurden von innen kühlbare Koagulationswalzen entwickelt, die rotierend in den CR-Latex eintauchen und dabei eine dünne Latexschicht beim Rotieren mitnehmen und auf der Oberfläche ausfrieren (US-B 2,187,146). Der dünne Film aus CR-Koagulat und Eis wird mit einem Schaber von der Walze abgenommen und weitergeleitet.

Aus dem Stand der Technik sind weitere Isolierungsverfahren bekannt. US 4,103,074 beschreibt ein Verfahren zur Koagulierung eines Polymer-Latex unter Verwendung eines Schneckenextruders, wobei der Polymer-Latex während der Förderung im Schneckengang koaguliert wird.

US 3,926,877 beschreibt ein Verfahren zur Isolierung eines CR-Kautschuks, wobei der CR-Latex mit einer wässrigen Rußdispersion gemischt wird, bevor dieser mit einem Koagulierungsmittel versetzt wird. Das koagulierte Produkt wird aus der wässrigen Phase abgetrennt.

DE 30 31 088 C2 offenbart ein Verfahren zur Herstellung eines koagulierten Latex eines synthetischen Polymers, wobei ein gasförmiges oder flüssiges Koagulierungsmittel in Form eines Nebels mittels einer Spraydüse auf das Polymerlatex-Tröpfchen aufgebracht wird, so dass Polymerkügelchen ausgefällt werden.

Das bekannteste und weitverbreitete Verfahren zur Isolierung von CR-Feststoffen ist das Gefrierkoagulationsverfahren. Dieses Verfahren weist ökologische und ökonomische Nachteile auf, da das auf der Walze ausgefrorene Koagulat sehr schwer von der Walze abzutrennen ist. Das vereiste Koagulat muss wieder aufgetaut und mit Wasser vom Emulgator befreit werden, was wiederum aus ökologischer Sicht nicht wünschenswert ist. Auch die danach anschließende mechanische Entwässerung des Koagulats bedarf viel Energiezufuhr und Zeit. Zur endgültigen Trocknung des Koagulats werden üblicherweise Trocknungsöfen verwandt, in denen das restliche, im Produkt enthaltende Wasser entfernt wird.

Aufgabe der Erfindung ist es nun, ein Verfahren zur Gewinnung und Isolierung von Polychloropren-Feststoffen bereitzustellen, welches die oben genannten Nachteile nicht aufweist.

Zur Lösung dieser Aufgabe wird ein Verfahren der Eingangs genannten Art vorgeschlagen, wobei eine wässrige Polychloropren-Dispersion mit Koagulationsmittel enthaltendem Wasserdampf in Kontakt gebracht wird, wodurch der Polychloropren-Feststoff koaguliert.

Beim erfindungsgemäßen Verfahren koaguliert der CR Feststoff vorzugsweise in Strangform oder als Krümel.

Überraschenderweise wurde festgestellt, dass das erfindungsgemäße Verfahren bei allen Polychloropren-Dispersionen eingesetzt werden kann, unabhängig davon nach welchem herkömmlichen Polymerisationsverfahren diese hergestellt wurden.

Das erfindungsgemäße Verfahren ist energieeffizienter, ressourcenschonender und damit umweltverträglicher.

Der ausgefällte Polychloropren-Feststoff wird anschließend aus der Koagulationssuspension abgetrennt und dann vorzugsweise in einer Entwässerungsvorrichtung entwässert. Beispielsweise kann hier eine Seiher-Schnecke oder Entwässerungswalzen eingesetzt werden. Andere bekannte Entwässerungsvorrichtungen sind ebenfalls einsetzbar.

Anschließend wird der entwässerte Polychloropren-Feststoff mittels einer Trocknungsvorrichtung getrocknet. Es handelt sich bei der Trocknungsvorrichtung beispielsweise um einen Doppelwellenextruder, eine Trocknungsschnecke oder einen Trocknungskneter. Vorzugsweise können in der Trocknungsvorrichtung Additive und/oder Inerte zugesetzt werden. Hierdurch können die übrigen Produkteigenschaften des erfindungsgemäßen Polychloropren-Feststoffes für jede Anforderung auch nach der Aufarbeitung optimal beeinflusst werden. Additive zur Beeinflussung der Produkteigenschaften sind vorzugsweise zum Beispiel Stabilisatoren, Beschleuniger, Emulgatoren, Laugen, Alterungsschutzmittel und viskositätsbeeinflussende Verarbeitungshilfsmittel. Es können alle herkömmlichen Additive eingesetzt werden. Inerte sind zum Beispiel Stickstoff, Argon, Kohlenstoffdioxid, welche zur Beeinflussung der Polymerschmelztemperaturen zugesetzt werden.

Der erfindungsgemäße Polychloropren-Feststoff wird bevorzugt mittels der Unterwassergranulierung granuliert und gekühlt.

Vorzugsweise handelt es sich bei der Polychloropren-Dispersion um einen Latex, welcher mittels der Emulsionspolymerisation hergestellt wurde. Die Polymerisation erfolgt zwischen 5°C und 50 °C Polymerisationstemperatur. Der Polymerisationsumsatz liegt üblicherweise im Bereich von 50% bis 80% liegt. Nach der Polymerisation wird überschüssiges Monomer mittels Vakuum-Entgasung auf einen Wert im Bereich von 1000ppm bis 1ppm entfernt. Emulsionspolymerisationsverfahren sind aus dem Stand der Technik bekannt und können hier eingesetzt werden.

Für die Polymerisation können neben Chloropren (2-Chlor-1,3-Butadien) optional auch noch ein oder mehrere verschiedene Co-Monomere, wie etwa 2,3-Dichlorbutadien, zur Steuerung der Kristallisation zugesetzt werden.

Die Polychloropren-Dispersion, aus der der erfindungsgemäße CR-Feststoff gewonnen wird, weist vorzugsweise einen Feststoffanteil im Bereich von 20 bis 45 Gew.-% und einen Gelanteil im Bereich von 0 bis 10 Gew.-% auf. Der Gelanteil kann jedoch auch gezielt erhöht werden.

Vorzugsweise wird der Koagulationsmittel enthaltende Wasserdampf aus Wasserdampf und einer wässrigen Koagulationsmittellösung gebildet. Als Koagulationsmittellösung wird bevorzugt eine wässrige Lösung eines Koagulationsmittels aus anorganischen Salzen, bevorzugt von Metallen der zweiten und dritten Hauptgruppe des Periodensystems, eingesetzt.

Als Koagulationsmittel wird bevorzugt Calciumchlorid, Magnesiumchlorid, Magnesiumsulfat, Aluminiumchlorid und/oder Aluminiumsulfat eingesetzt.

Vorzugsweise weist die Koagulationsmittellösung eine Koagulationsmittel-Konzentration zwischen 1 Gew.-% und 60 Gew.-%, bevorzugt zwischen 2 Gew.-% und 55 Gew.-%, besonders bevorzugt zwischen 10 Gew.-% und 35 Gew.-%, bezogen auf die Koagulationsmittellösung, auf.

Bevorzugt wird die Polychloropren-Dispersion vor dem Kontakt mit dem Koagulationsmittel enthaltenden Wasserdampf verdünnt.

Dabei wird die Polychloropren-Dispersion vorzugsweise auf einen Feststoffgehalt von 38 Gew.-% bis 45 Gew.-%, bevorzugt von 28 Gew.-% bis 35 Gew.-% und besonders bevorzugt von 20 Gew.-% bis 28 Gew.-%, bezogen auf die Polychloropren-Dispersion, verdünnt.

Für die Verdünnung wird bevorzugt Wasser, besonders bevorzugt demineralisiertes Wasser eingesetzt.

Die Verdünnung ist insofern wichtig, da nicht nur das Verkleben und Verstopfen der Strömungs-/Koagulationsvorrichtung verhindert bzw. reduziert werden soll, sondern auch eine optimale Koagulation, bedingt durch den Kontakt zwischen der CR-Dispersion und dem Koagulationsmittel enthaltenden Wasserdampf, gewährleistet werden kann.

Besonders bevorzugt werden 80 bis 1000 kg Wasserdampf pro Tonne Feststoff der Polychloropren-Dispersion, bevorzugt 80 bis 300 kg Wasserdampf pro Tonne Feststoff der Polychloropren-Dispersion, eingesetzt.

Des Weiteren werden 10 bis 40 kg Koagulationsmittel pro Tonne Feststoff der Polychloropren-Dispersion, bevorzugt 10 bis 25 kg Koagulationsmittel pro Tonne Feststoff der Polychloropren-Dispersion, eingesetzt.

Für die Koagulation durchläuft die wässrige Polychloropren-Dispersion eine Strömungs-/Koagulationsvorrichtung, wobei die Strömung-/ Koagulationsvorrichtung Aussparungen aufweist, durch die der Koagulationsmittel enthaltende Wasserdampf durchtreten kann und in der Strömungs-/Koagulationsvorrichtung auf die Polychloropren-Dispersion trifft. Dabei koaguliert der erfindungsgemäße Polychloropren-Feststoff.

Bevorzugt wird der Polychloropren-Feststoff in der Entwässerungsvorrichtung bis zu einer Restfeuchte von 10 Gew.-% bis 15 Gew.-%, bevorzugt 1,0 Gew.-% bis 9 Gew.-%, bezogen auf den Polychloropren-Feststoff, entwässert.

In der Trocknungsvorrichtung wird der entwässerte Polychloropren-Feststoff vorzugsweise bis zu einer Restfeuchte von 1 Gew.-% bis 1,5 Gew.-%, besonders bevorzugt 0,5 Gew.-% bis 1 Gew.-% und ganz besonders bevorzugt 0,1 Gew.-% bis 0,5 Gew.-%, bezogen auf den entwässerten Polychloropren-Feststoff, getrocknet.

Am Ende der Trocknungsphase in der Trocknungsvorrichtung liegt der Polychloropren-Feststoff als Kautschukschmelze vor. Die Schmelze tritt durch eine Kopfplatte aus und wird mit einer Schneidvorrichtung konfektioniert und in der Unterwassergranulierung durch Wasser gekühlt und transportiert.

Vorzugsweise wird dem Wasser in der Unterwassergranulierung ein Trennmittel zugesetzt. Als Trennmittel kommen hier beispielsweise Talkum, Metallstearate in Frage. Andere herkömmliche Trennmittel sind ebenfalls vorstellbar.

Der so hergestellte Polychloropren-Feststoff kann zur Herstellung von Vulkanisaten, Gummimischungen und Klebstoffen oder Klebstoffrohstoffen verwendet werden.

Nachstehend wird die Erfindung anhand einer Zeichnung näher erläutert:

### Verfahren zur Isolierung und Gewinnung eines erfindungsgemäßen Polychloropren-Feststoffes

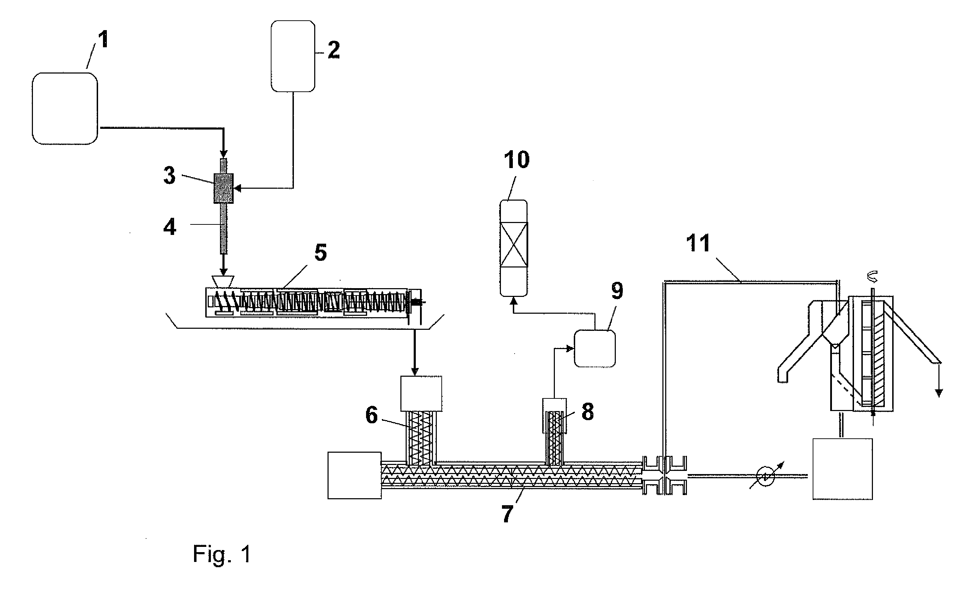

Fig. 1 zeigt einen schematischen Aufbau eines erfindungsgemäßen Verfahrens.

Zunächst wird eine Polychloropren-Dispersion nach herkömmlichem Verfahren hergestellt.

### Herstellung einer Polychloropren-Dispersion

Die Herstellung einer Polychloropren-Dispersion erfolgt unter Einsatz der unten genannten Grundrezeptur (Angaben sind in Gew.-Teilen pro 100 Gew.-Teile eingesetztes Chloropren):
- 125 Gew.-Teile: Wasser
- 100 Gew.-Teile: Chloropren
- 3 Gew.-Teile: Natrium Salz der disproportionierten Abietinsäure
- 0,5 Gew.-Teile: Kaliumhydoxid
- 0,2 Gew.-Teile: n-Dodecylmerkaptan
- 0,5 Gew.-Teile: Natrium Salz der mit Formaldehyd kondensierten Naphthalinsulfonsäure

Die Polychloropren-Dispersion wird durch radikalische Emulsionspolymerisation zwischen 40°C und 45°C aus den vorgenannten Komponenten nach üblichen Methoden (z. B. Ullmanns Enciclopedia of Industrial Chemistry, Vol 23A, S. 252-262.) hergestellt. Die Polymerisation wird bei einem Umsatz zwischen 50% und 70% abgestoppt und die Dispersion durch Vakuum-Entgasung von Restmonomeren befreit.

Mithilfe des erfindungsgemäßen Verfahrens wird diese Dispersion aufgearbeitet, das wie folgt beschrieben werden kann:

Die o. g. Polychloropren-Dispersion wird aus einem Lagerbehälter 1 in einer Strömungs-/Koagulationsvorrichtung 3 gefördert. Vor Einlauf in die Ström-ungs-/Koagulationsvorrichtung 3 kann die Polychloropren-Dispersion mit Wasser verdünnt werden.

Aus einem weiteren Lagerbehälter 2 wird das wässrige Koagulationsmittel, welches vorab mit Wasserdampf gemischt wurde, der Strömungs-/Koagulationsvorrichtung 3 zugeführt und über deren Aussparungen mit der Polychloropren-Dispersion in Kontakt gebracht. Hierbei wird die Polychloropren-Dispersion in der Strömungs-/Koagulationsvorrichtung 3 und im nachfolgendem Fällrohr 4 quantitativ gefällt wird.

Das Fällrohr 4 mündet in den Einzugsbereich der Entwässerungsvorrichtung 5, dort wird der erfindungsgemäße ausgefällte Polychloropren-Feststoff entwässert.

Der entwässerte Polychloropren-Feststoff wird entweder als Strang oder als Krümel der Trocknungsvorrichtung 7 zugeführt und getrocknet. Um die Produkteigenschaften des erfindungsgemäßen Polychloropren-Feststoffes zu beeinflussen, können in der Zuführschnecke 6 oder im nachfolgenden Bereich der Trocknungsvorrichtung 7 Additive oder Inerte zudosiert werden.

Über unter Vakuum stehende Döme 8 werden die Brüden abgezogen und die Rückhaltung von Kautschukpartikeln mit Stopfschnecken in den Dömen 8 gewährleistet. Hinter den Dömen 8 befinden sich Abscheider 9, in denen mitgerissene Kautschukpartikel abgeschieden und nachfolgend einem Abluftwäscher 10 zugeführt werden.

Die heiße Kautschukschmelze aus der Trocknungsvorrichtung 7 wird in der Unterwassergranulierung über eine Kopfplatte und Schneidmesser in Chips geschnitten. Das Abkühlen und der Transport der Chips erfolgt über einen Wasserstrom 11, der wahlweise mit Additiven (z.B. Trennmittel) versetzt sein kann

Die Chips werden zunächst über eine Siebrutsche vom Wasser getrennt. Die Restenergie der Chips verdampft das an der Oberfläche anhaftende Wasser. Ergänzend kann ein warmer Luftstrom das Entfernen des anhaftenden Wassers unterstützen.

Danach werden die Chips weiter abgekühlt und ggf. talkumiert. Anschließend werden sie in Säcke verwogen und auf Paletten oder in Kisten verpackt.

## Patentansprüche

1. Verfahren zur Isolierung und Gewinnung von Polychloropren-Feststoffen, **dadurch gekennzeichnet, dass** eine wässrige Polychloropren-Dispersion mit Koagulationsmittel enthaltendem Wasserdampf in Kontakt gebracht wird, wodurch der Polychloropren-Feststoff koaguliert.

2. Verfahren nach Anspruch 1, **dadurch gekennzeichnet, dass** der Polychloropren-Feststoff aus der Koagulationssuspension abgetrennt wird.

3. Verfahren nach Anspruch 2, **dadurch gekennzeichnet, dass** der Polychloropren-Feststoff mittels einer Entwässerungsvorrichtung entwässert wird.

4. Verfahren nach Anspruch 3, **dadurch gekennzeichnet, dass** der entwässerte Polychloropren-Feststoff mittels einer Trocknungsvorrichtung getrocknet wird.

5. Verfahren nach Anspruch 4, **dadurch gekennzeichnet, dass** dem entwässerten Polychloropren-Feststoff in der Trocknungsvorrichtung Additive und/oder Inerte zugesetzt werden.

6. Verfahren nach Anspruch 5, **dadurch gekennzeichnet, dass** der getrocknete, entwässerte, Polychloropren-Feststoff mittels der Unterwassergranulierung granuliert und gekühlt wird.

7. Verfahren nach Anspruch 6, **dadurch gekennzeichnet, dass** die Polychloropren-Dispersion ein Latex ist.

8. Verfahren nach Anspruch 7, **dadurch gekennzeichnet, dass** die Polychloropren-Dispersion mittels der Emulsionspolymerisation hergestellt wird.

9. Verfahren nach Anspruch 8, **dadurch gekennzeichnet, dass** der Koagulationsmittel enthaltende Wasserdampf mittels Wasserdampf und einer wässrigen Koagulationsmittelösung gebildet wird.

10. Verfahren nach Anspruch 9, **dadurch gekennzeichnet, dass** als Koagulationsmittellösung eine wässrige Lösung aus anorganischen Salzen (Koagulationsmittel), bevorzugt von Metallen der zweiten und dritten Hauptgruppe des Periodensystems, eingesetzt wird.

11. Verfahren nach Anspruch 10, **dadurch gekennzeichnet, dass** als Koagulationsmittel Calciumchlorid, Magnesiumchlorid, Magnesiumsulfat, Aluminiumchlorid und/oder Aluminiumsulfat eingesetzt wird.

12. Verfahren nach Anspruch 11, **dadurch gekennzeichnet, dass** die Koagulationsmittellösung eine Koagulationsmittel-Konzentration zwischen 1 Gew.-% und 60 Gew.-%, bevorzugt zwischen 2 Gew.-% und 45 Gew.-%, besonders bevorzugt zwischen 10 Gew.-% und 35 Gew.-%, bezogen auf die Koagulationsmittellösung aufweist.

13. Verfahren nach Anspruch 12, **dadurch gekennzeichnet, dass** die Polychloropren-Dispersion vor dem Kontakt mit dem Koagulationsmittel enthaltenden Wasserdampf verdünnt wird.

14. Verfahren nach Anspruch 13, **dadurch gekennzeichnet, dass** die Polychloropren-Dispersion auf einen Feststoffgehalt von 38 Gew.-% bis 45 Gew.-%, bevorzugt von 28 Gew.-% - 35 Gew.-% und besonders bevorzugt von 20 Gew.-% - 28 Gew.-%, bezogen auf die Polychloropren-Dispersion verdünnt wird.

15. Verfahren nach Anspruch 9, **dadurch gekennzeichnet, dass** 80 kg bis 1000 kg Wasserdampf / t Feststoff der Polychloropren-Dispersion, bevorzugt 80 kg bis 250 kg Wasserdampf / t Feststoff der Polychloropren-Dispersion eingesetzt wird.

16. Verfahren nach Anspruch 11, **dadurch gekennzeichnet, dass** 10 bis 40 kg Koagulationsmittel / t Feststoff der Polychloropren-Dispersion, bevorzugt 10 kg bis 25 kg Koagulationsmittel / t Feststoff der Polychloropren-Dispersion eingesetzt wird.

17. Verfahren nach Anspruch 16, **dadurch gekennzeichnet, dass** die wässrige Polychloropren-Dispersion eine Strömungs-/Koagulationsvorrichtung durchströmt, wobei die Strömungs-/Koagulationsvorrichtung Aussparungen aufweist, durch die der Koagulationsmittel enthaltende Wasserdampf durchtreten kann und in der Strömungs-/Koagulationsvorrichtung auf die Polychloropren-Dispersion trifft.

18. Verfahren nach Anspruch 3, **dadurch gekennzeichnet, dass** der Polychloropren-Feststoff in der Entwässerungsvorrichtung bis zu einer Restfeuchte von 10 Gew.-% bis 15 Gew.-%, bevorzugt 1,0 Gew.-% bis 9 Gew.-%, bezogen auf den Polychloropren-Feststoff entwässert wird.

19. Verfahren nach Anspruch 4, **dadurch gekennzeichnet, dass** der entwässerte Polychloropren-Feststoff in der Trocknungsvorrichtung bis zu einer Restfeuchte von 1 Gew.-% bis 1,5 Gew.-%, bevorzugt 0,5 Gew.-% bis 1 Gew.-%, besonders bevorzugt 0,1 Gew.-% bis 0,5 Gew.-%, bezogen auf den entwässerten Polychloropren-Feststoff aufweist.

20. Verfahren nach Anspruch 19, **dadurch gekennzeichnet, dass** der getrocknete Polychloropren-Feststoff am Ende der Trocknungsphase in der Trocknungsvorrichtung als Kautschukschmelze vorliegt.

21. Verfahren nach Anspruch 20, **dadurch gekennzeichnet, dass** dem Wasser in der Unterwassergranulierung Trennmittel zugesetzt werden.
